# EUROPEAN PATENT APPLICATION

(11) **EP 3 699 984 A1**
(43) Date of publication of application: **26.08.2020**
(21) Application number: 20158262.4
(22) Date of filing: 19.02.2020
(51) Int. Cl.: H01M 4/13, H01M 4/134, H01M 4/36

(54) **SUBSTRATE FOR ELECTRODE AND METHOD OF MANUFACTURING ELECTRODE USING THE SAME**

(30) Priority: 21.02.2019 KR 20190020638
(71) Applicant: SK Innovation Co., Ltd., Seoul 03188 (KR)
(72) Inventor: LEE, Dong Hoon, 34124 Daejeon (KR); KANG, Yong Hee, 34124 Daejeon (KR); LIM, Hyo Sung, 34124 Daejeon (KR)
(74) Representative: Stolmár & Partner Patentanwälte PartG mbB

(57) **Abstract**

A substrate for an electrode is provided, the substrate for an electrode including a support and an electrode mixture layer including an active material on the support, and the support includes wrinkles in which peak regions and valley regions are formed in a transverse direction.

## Description

### CROSS-REFERENCE TO RELATED APPLICATION(S)

This application claims benefit of priority to Korean Patent Application No. 10-2019-0020638 filed on February 21, 2019 in the Korean Intellectual Property Office, the disclosure of which is incorporated herein by reference in its entirety.

### BACKGROUND

### 1. FIELD

The present disclosure relates to a substrate for an electrode used in the manufacturing of an electrode assembly and a method of manufacturing an electrode using the same.

### 2. DESCRIPTION OF RELATED ART

Recently, compact and light-weighted electrical/electronic devices, such as mobile phones, laptop computers, camcorders, and the like, have been actively developed and produced. Such portable electrical/electronic devices may include a battery pack to operate in a place in which a power is not provided. The embedded battery pack may include at least one battery to output a predetermined level of voltage so as to drive the portable electrical/electronic devices for a predetermined period of time.

A secondary battery used as the above-described battery may include an electrode assembly including a cathode electrode coated with a cathode electrode active material, an anode electrode coated with an anode electrode active material, a separator configured to be coiled in the electrode assembly, to be disposed between the cathode electrode and the anode electrode, to prevent shorts, and to only allow lithium ions to move, a case for a lithium-ion secondary battery in which the electrode assembly is accommodated, an electrolyte solution filled in the case for a lithium-ion secondary battery and allowing lithium ions to move, and other elements.

Generally, to produce an electrode of high density, a support for a cathode electrode/an anode electrode may be coated with an active material, and a pressing process may be performed using a roll press.

In the process of pressing a substrate for an electrode using a roll press as described above, the support for an electrode coated with an active material may be elongated in a machine direction/a transverse direction (MD/TD) along with the active material coated on both surfaces of the support. Accordingly, a difference in amount of elongation may occur between a part (a coated part) coated with the active material and a part (a non-coated part) which is not coated with the active material.

Further, when the difference in amount of elongation between the coated part and the non-coated part is higher than a predetermined level, an electrode may be curled, or worse, the electrode may be bent such that the electrode may be broken during a roll-press process, which may be a problem.

Accordingly, to reduce the difference in amount of elongation between the coated part and the non-coated part, a method of using a high-strength support has been developed, which may reduce the amount of elongation of a coated part. As another method, a method of annealing a non-coated part by induction-heating has been developed.

The above-described methods may be effective for improving stability of a roll-press process. However, it may be difficult to produce an electrode having density higher than a certain level using the methods, and further, in the case of the annealing method, welding strength may degrade in a tap-welding process, or foil may be torn during a welding process, or other defects may occur.

### SUMMARY

An aspect of the present disclosure is to provide a substrate for an electrode in which breakage of an electrode is significantly reduced while a high-density electrode is produced and a method of manufacturing an electrode using the same.

According to an aspect of the present disclosure, a substrate for an electrode is provided, the substrate for an electrode including a support and an electrode mixture layer including an active material on the support, and the support includes wrinkles in which peak regions and valley regions are formed in a transverse direction.

According to another aspect of the present disclosure, a method of manufacturing an electrode is provided, the method including providing a support including wrinkles in which peak regions and valley regions are formed in a transverse direction, manufacturing a substrate for an electrode by coating at least one surface of the support with an electrode mixture layer including an active material, and pressing the substrate for an electrode.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1A and FIG. 1B are diagrams illustrating a support used for a substrate for an electrode according to an example embodiment of the present disclosure;
FIG. 2A and FIG. 2B are diagrams illustrating a substrate for an electrode according to an example embodiment of the present disclosure; and
FIG. 3A and FIG. 3B are diagrams illustrating an electrode manufactured according to an example embodiment of the present disclosure.

### DETAILED DESCRIPTION

Hereinafter, example embodiments of the present disclosure will be described with reference to the accompanying drawings. The present disclosure is not limited to example embodiments, and it is to be understood that modifications can be made without departing from the spirit and scope of the present disclosure.

In the example embodiment, a substrate for an electrode may be provided, the substrate for an electrode in which breakage of the electrode is significantly reduced while an electrode used for an electrode assembly of a secondary battery is pressed in high density.

More particularly, in the example embodiment, a substrate for an electrode may be provided, the substrate for an electrode including a support, and an electrode mixture layer including an active material on the support, and the support may include wrinkles in which peak regions and valley regions are formed in a transverse direction (TD).

The substrate for an electrode may be used to manufacture an anode electrode or a cathode electrode, and a thickness of the substrate may be 3 to 30 µm.

As a material of the substrate for an electrode configured as a cathode electrode, a material which does not cause chemical changes in a battery and has relatively high conductivity may be used. For example, a support formed of stainless steel, aluminum, nickel, titanium, sintered carbon, or formed of aluminum or stainless steel surface-processed with carbon, nickel, titanium, silver, or the like, may be coated with a cathode electrode active material such as lithium manganese oxide, lithium cobalt oxide, lithium nickel oxide, lithium iron phosphate, or a compound or a mixture including at least one of the above-mentioned materials, thereby forming the substrate for an electrode.

As a material of the substrate for an electrode configured as an anode electrode, a material which does not cause chemical changes in a battery and has conductivity may be used. For example, a support formed of copper, stainless steel, aluminum, nickel, titanium, sintered carbon, or formed of copper or stainless steel surface-processed with carbon, nickel, titanium, silver, or the like, may be coated with an anode electrode active material such as a lithium metal, a lithium alloy, carbon, petroleum coke, activated carbon, graphite, a silicon compound, a tin compound, a titanium compound, or alloys thereof, thereby forming the substrate for an electrode.

Fine serrations may be formed on a surface of the support used in the substrate for an electrode configured as an anode electrode or a cathode electrode such that cohesion with the active material may be enhanced, and the support may be implemented as a film, a sheet, foil, a net, a porous material, foam, or a non-woven fabric. For example, as the support of the substrate for a cathode electrode, aluminum foil may be used.

As the active material coated on the support used for the substrate for a cathode electrode, a cathode electrode active material, a conductive material for improving conductivity, and a binder for improving cohesion force between materials, may be mixed with a solvent to form slurry, and the slurry may be used. The slurry may be coated on the support for a cathode electrode, thereby forming the substrate for a cathode electrode.

The active material used for the substrate for a cathode electrode may include one or more materials selected from a group consisting of lithium manganese oxide, nickel lithium cobalt oxide, lithium nickel oxide, and lithium iron phosphate.

As the conductive material, any material which does not cause chemical changes and has conductivity may be used. For example, graphite such as natural graphite or artificial graphite; carbon black such as acetylene black, Ketjen black, channel black, furnace black, lamp black, thermal black, or the like; a conductive fiber such as carbon fiber, metal fiber, or the like, a metal powder such as fluoro carbon, aluminum, nickel powder, or the like, a conductive whisky such as zinc oxide, potassium titanate, or the like, a conductive metal oxide such as titanium oxide; a conductive material such as a polyphenylene derivative, or the like, may be used.

Also, as the active material coated on the support used for the substrate for an anode electrode, an anode electrode active material and a binder for improving cohesion force of the anode electrode active material may be mixed with a solvent to form slurry, and the slurry may be used. The slurry may be coated on the support for an anode electrode, thereby forming the substrate for an anode electrode.

The active material used for the substrate for an anode electrode may include one or more materials selected from a group consisting of a lithium metal, a lithium alloy, carbon, petroleum coke, activated carbon, graphite, a silicon compound, a tin compound, and a titanium compound.

The binder may support the combination of the active material with a conductive material and the combination with a current collector. For example, as the binder, various copolymers such as polyvinylindene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene monomer rubber (EPDM), sulfonated EPDM, styrene butadiene rubber, fluoro rubber, or the like, may be used.

As the solvent, a generally used solvent may be used. For example, an NMP may be used as a cathode electrode solvent, and water may be used as an anode electrode solvent.

The slurry may be applied on the support and may be dried, thereby manufacturing an electrode. The applying may be performed using a generally used method such as a die coating method, a comma coating method, a gravure coating method, a curtain coating method, a deep coating method, an air-knife coating method, a reverse-roll coating method, a blade coating method, or the like. The drying may be performed by allowing the slurry to pass through a hot-air dryer of 100 to 180°C.

In the process of applying the slurry on the support, a length of a part which is not coated with the slurry may be configured to be 3 mm to 50 mm. When a length of the part not coated with the slurry is less than 3 mm, uniformity may degrade in the coating process due to tolerance, contamination of facility may occur, and breakage may occur in a subsequent process such as a pressing and a slitting process. When the length of the part not coated with the slurry is greater than 50 mm, a defect caused by wrinkles and bending may occur while the support is driven.

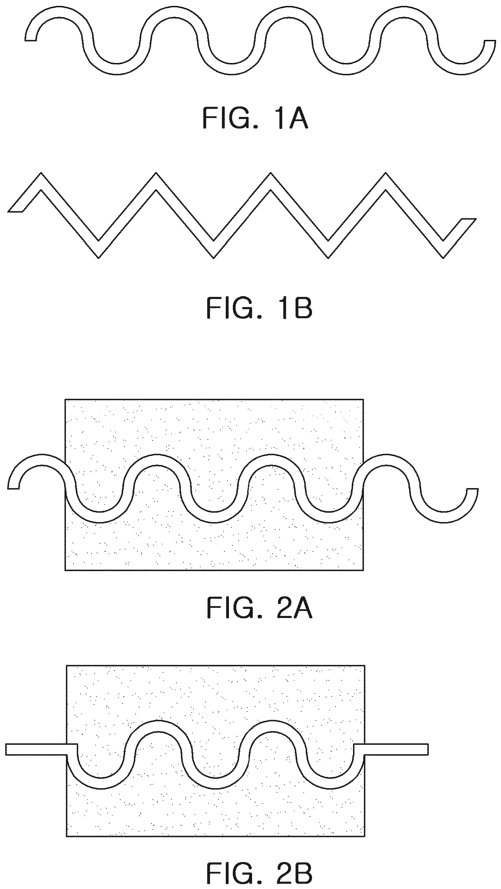

The TD direction may refer to a vertical direction in relation to a direction of a flow of a process in the pressing process. For example, when wrinkles are formed as illustrated in FIG. 1, the pressing of the substrate for an electrode may be performed from the left side to the right side or from the right side to the left side.

The wrinkles may be angular or may have curvatures, but an example of the shape of the wrinkles is not limited thereto. The wrinkles may have a wave pattern or a zigzag pattern. For example, as illustrated in FIG. 1A, the wrinkles may have curvatures, a wave pattern, or as illustrated in FIG. 1B, the wrinkles may have a zigzag pattern.

As a method of forming wrinkles on the support, an imprinting method, a method of forming wrinkles using a roller for forming wrinkles, or the like, may be used. However, the method is not limited to the above-mentioned examples, and any method which may form wrinkles on the support may be used. For example, wrinkles may be formed on the support through a imprinting process.

A length from a valley region to a peak region of the wrinkles may be 1.1 to 10 times a thickness of the support, or may be 1.2 to 6 times a thickness of the support. When a length from the valley region to the peak region of the wrinkles is less than 1.1 times a thickness of the support, the effect of the wrinkles may be insignificant such that, when the electrode is pressed to have high density, breakage may not be prevented. When a length from the peak region of the wrinkle exceeds 10 times a thickness of the support, it may be difficult to uniformly coat a painted film in the coating process, and when a battery cell is manufactured using the electrode which is not uniformly formed, Li may be locally precipitated and lifespan may be rapidly degraded.

In another example embodiment, a method of manufacturing an electrode may be provided, the method including providing a support including wrinkles formed in a transverse direction (TD), manufacturing a substrate for an electrode by coating at least one surface of the support with an electrode mixture layer including an active material, and pressing the substrate for an electrode.

When the electrode is configured as a cathode electrode, the active material may include one or more materials selected from a group consisting of lithium manganese oxide, nickel lithium cobalt oxide, lithium nickel oxide, and lithium iron phosphate. When the electrode is configured as an anode electrode, the active material may include one or more materials selected from a group consisting of a lithium metal, a lithium alloy, carbon, petroleum coke, activated carbon, graphite, a silicon compound, a tin compound, and a titanium compound.

Wrinkles may be formed on the support used for a substrate for an electrode using an imprinting process. When the wrinkles are formed, a length of the support taken in a direction of pressing may be 0.5 times to 0.95 times a length before the wrinkles are formed. When a length of the support is less than 0.5 times a length before the wrinkles are formed, the electrode may not be uniformly pressed and may be folded such that there may be an issue in the driving. When a length of the support exceeds 0.95 times a length before the wrinkles are formed, wrinkles may not be properly formed such that it may be difficult to reduce breakage.

The active material may be coated on the wrinkles formed on the support, and in the substrate for an electrode coated with the active material, the wrinkles may have absorb stress applied to the substrate in a machine direction/a transverse direction (MD/TD) during the pressing process. Also, the amount of elongation may be reduced such that a difference in amount of elongation with a support which is not coated with the active material may be reduced.

The pressing may include disposing the substrate for an electrode on a belt and pressing the substrate for an electrode using a roll. For example, the substrate for an electrode may be pressed by a roll-press method.

When the electrode is configured as a cathode electrode, the pressing process may be performed such that density of the electrode is 3.2g/cc to 4.0g/cc. When density of the cathode electrode is less than 3.2g/cc, breakage may not occur even in a support without wrinkles during the pressing process, and accordingly, wrinkles may not be effective. When density of the cathode electrode exceeds 4.0g/cc, it may be difficult to implement aimed density during the pressing process, or even when density is implemented, breakage may frequently occur such that it may be difficult to perform the manufacturing process.

When the electrode is configured as an anode electrode, the pressing may be performed such that density of the electrode is 1.4g/cc to 1.8g/cc. When density of the anode electrode is less than 1.4g/cc, wrinkles may not be effective. When density of the anode electrode exceeds 1.8g/cc, it may be difficult for an electrolyte solution to permeate the anode electrode due to the relatively high density, which may cause degradation of performance of a battery cell or may cause separation of a painted film during a process, or other issues may occur.

Also, an electrode assembly used for a lithium-ion secondary battery may be manufactured using the electrode manufactured through the substrate for an electrode provided in the example embodiments.

The electrode assembly may be configured as a stack-type electrode laminate in which two or more electrodes may be stacked, an anode electrode and a cathode electrode may be alternately stacked, and a separation film may be interposed between the electrodes.

In the electrode assembly, as for arrangement of the electrodes alternately stacked with the separation film interposed therebetween, the electrodes having the same polarity may be disposed on both surfaces of the electrode assembly, arrangement such as a cathode electrode/an anode electrode/a cathode electrode or an anode electrode/a cathode electrode/an anode electrode, or alternatively, the electrodes having different polarities may be disposed on both surfaces of the electrode assembly, arrangement such as a cathode electrode/an anode electrode or a cathode electrode/an anode electrode/a cathode electrode/an anode electrode.

As a cathode electrode and an anode electrode included in the electrode assembly, the electrode manufactured in the example embodiment may be used. A material of the separation film included in the electrode assembly is not limited to any particular material, and generally used separation films may be used.

For example, the separation film may be configured as a multilayer film manufactured using polyethylene, polypropylene, which have a microporous structure, or a combination thereof, or may be configured as a polymer film used for solid polymer electrolyte or gel-type polymer electrolyte such as polyvinylindene fluoride, polyethylene oxide, polyacrylonitrile, or a polyvinylindene fluoride hexafluoropropylene copolymer.

Also, a lithium-ion secondary battery may be manufactured using the electrode assembly. Also, a battery pack including two or more secondary batteries which include the electrode assembly may be obtained, and a device including one or more of the secondary batteries . The device may be implemented by a mobile phone, a portable computer, a smartphone, a smartpad, a netbook, a light electronic vehicle (LEV), an electrical vehicle, a hybrid electrical vehicle, a plug-in hybrid electrical vehicle, or a power storage device.

In the description below, the present disclosure will be described in greater detail in accordance with an embodiment. The embodiment described below is merely an example, and the scope of the present disclosure is not limited thereto.

### Embodiment

### Embodiment 1

### <Manufacturing Substrate for Electrode Including Support Including Wrinkles Formed in Transverse Direction>

A support including winkles formed as illustrated in FIG. 1 was manufactured using an aluminum foil having a thickness of 12 µm by an imprinting method. A length from a peak region to a valley region of the support was 30 µm.

Cathode electrode slurry was prepared by mixing 95 parts by weight of an NCM-based cathode electrode active material, 2.0 parts by weight of a carbon black conductive material, 1.0 parts by weight of graphite-based conductive material, 2.0 parts by weight of a PVDF binder, and an NMP. The slurry was applied on both surfaces of an aluminum foil on which the wrinkles were formed for a loading amount to be 20mg/cm² with reference to a cross-sectional surface, and the foil was passed through a hot air dryer, thereby manufacturing a substrate for a cathode electrode. A thickness of the substrate for a cathode electrode was 173 µm to 182 µm, and there was a great deviation in thickness of the substrate for a cathode electrode along wrinkles of the substrate.

A diagram of the substrate for an electrode manufactured in Embodiment 1 is illustrated in FIG. 2A. FIG. 2A is a diagram illustrating the substrate for an electrode including wrinkles formed only in a region coated with an active material.

### Comparative Example 1

In Comparative Example 1, a substrate for an electrode was manufactured in the same manner as in Embodiment 1, other than the configuration in which wrinkles were not formed in the aluminum foil in Embodiment 1. A thickness of the substrate for an electrode was 173 µm to 175 µm, which was relatively uniform as compared to embodiment 1.

### Experimental Example

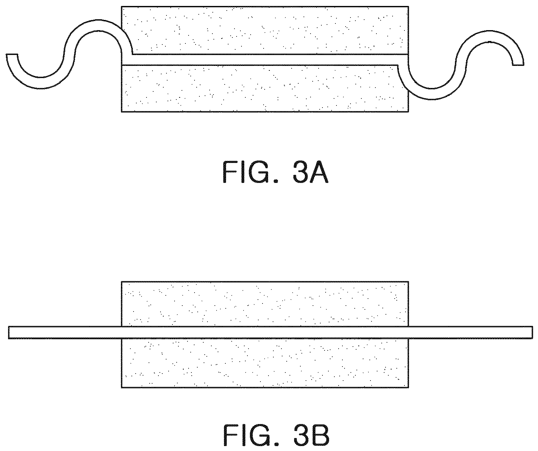

The substrates for an electrode of Embodiment 1 and Comparative Example 1 were placed on a belt for performing a roll-press process, and a pressing process was performed for a thickness of the substrate (that is, an electrode) for an electrode after the pressing process to be 125 µm. The electrode manufactured by the pressing process is illustrated in FIG. 3A. FIG. 3A is a diagram illustrating the substrate for an electrode illustrated in FIG. 2A to which the pressing process has been performed. FIG. 3A is a diagram illustrating the substrate for an electrode illustrated in FIG. 2B to which the pressing process has been performed.

When the substrate for an electrode of Embodiment 1 was pressed, breakage did not occur per 1000m pressing, whereas the substrate for an electrode of Comparative Example 1 was pressed, breakage occurred six times per 1000m pressing.

Thus, it has been indicated that, when the substrate for an electrode of Embodiment 1 was pressed, breakage was significantly reduced as compared to Comparative Example 1.

According to the aforementioned example embodiments, differently from breakage of an electrode occurring while a high-density electrode is produced, a substrate for an electrode which may significantly reduce breakage may be provided.

While the example embodiments have been shown and described above, it will be apparent to those skilled in the art that modifications and variations could be made without departing from the scope of the present invention as defined by the appended claims.

## Claims

1. A substrate for an electrode, comprising:
a support; and
an electrode mixture layer including an active material on the support,
wherein the support includes wrinkles in which peak regions and valley regions are formed in a transverse direction.

2. The substrate for an electrode of claim 1, wherein the support is at least one selected from a group consisting of copper, aluminum, nickel, titanium, sintered carbon, and stainless steel.

3. The substrate for an electrode of claim 1, wherein the wrinkles have a wave pattern or a zigzag pattern.

4. The substrate for an electrode of claim 1, wherein a length from a valley region to a peak region of the wrinkles is 1.1 times to 10 times a thickness of the support.

5. The substrate for an electrode of claim 1, wherein, when the electrode is configured as a cathode electrode, the active material includes one or more materials selected from a group consisting of lithium manganese oxide, nickel lithium cobalt oxide, lithium nickel oxide, and lithium iron phosphate.

6. The substrate for an electrode of claim 1, wherein, when the electrode is configured as an anode electrode, the active material includes one or more materials selected from a group consisting of a lithium metal, a lithium alloy, carbon, petroleum coke, activated carbon, graphite, a silicon compound, a tin compound, and a titanium compound.

7. A method of manufacturing an electrode, the method comprising:
providing a support including wrinkles in which peak regions and valley regions are formed in a transverse direction;
manufacturing a substrate for an electrode by coating at least one surface of the support with an electrode mixture layer including an active material; and
pressing the substrate for an electrode.

8. The method of claim 7, wherein the electrode mixture layer is coated on the wrinkles formed on the support.

9. The method of claim 7, the pressing includes disposing the substrate for an electrode on a belt and pressing the substrate for an electrode using a roll.

10. The method of claim 7, wherein, when the electrode is configured as a cathode electrode, the pressing is performed such that density of the electrode is 3.2g/cc to 4.0g/cc.

11. The method of claim 7, wherein, when the electrode is configured as an anode electrode, the pressing is performed such that density of the electrode is 1.4g/cc to 1.8g/cc.
